# FASCICULE DE BREVET EUROPEEN

(11) **EP 0 404 618 B1**
(45) Date de publication et mention de la délivrance du brevet: **15.12.1993**
(21) Numéro de dépôt: 90401466.9
(22) Date de dépôt: 31.05.1990
(51) Int. Cl.: F16K 31/06

(54) **Vanne électromagnétique pour le contrôle de l'écoulement d'un fluide dans une canalisation**
Elektromagnetisches Ventil zur Kontrolle des Flüssigkeitsdurchflusses in einer Leitung
Electromagnetic valve for the flow control of a fluid in a pipe

(30) Priorité: 02.06.1989 FR 8907296
(43) Date de publication de la demande: 27.12.1990
(73) Titulaire: DELOT PROCESS S.A., F-89600 Saint-Florentin (FR)
(72) Inventeur: Delot, José, F-89100 Sens (FR)
(74) Mandataire: Bruder, Michel

(56) Documents cités:
- DE-B- 1 037 789
- DE-C- 859 241
- DE-C- 1 157 047
- GB-A- 777 213
- GB-A- 1 308 087
- US-A- 3 970 112

## Description

La présente invention concerne une vanne électromagnétique pour contrôler l'écoulement d'un métal ou alliage métallique en phase liquide dans une canalisation en charge, comprenant un corps tubulaire en une matière perméable au champ magnétique, et au moins un enroulement inducteur polyphasé disposé autour du corps tubulaire pour créer un champ magnétique glissant le long de l'axe longitudinal dudit corps tubulaire. Une vanne électromagnetique de ce type est conne par exemple du DE-B-1 037 789.

Dans le domaine de la métallurgie, par exemple dans un équipement industriel de coulée ou dans un équipement pour recouvrir des produits sidérurgiques d'un revêtement métallique ou d'alliage métallique, tel qu'un équipement de galvanisation à chaud, ou dans d'autres applications encore, il est souvent nécessaire de pouvoir contrôler un écoulement de métal ou d'alliage métallique en phase liquide ; à cet égard, soit le métal ou l'alliage métallique est en fusion suite à une élévation contrôlée de sa température, soit le métal ou l'alliage métallique est normalement liquide à la température ambiante, ce qui est par exemple le cas du mercure. Pour contrôler un écoulement de métal ou d'alliage métallique liquide, il est usuel d'utiliser des systèmes électromécaniques ou hydromécaniques, tels que des busettes à tiroir, des quenouilles, etc. Ces systèmes sont générateurs d'un investissement important et de frais d'entretien et de maintenance relativement élevés à cause de la présence dans ces systèmes d'éléments mécaniques mobiles.

C'est pourquoi, notamment dans le brevet DE-B-1 037 789, il a déjà été proposé d'utiliser des vannes électromagnétiques ne comportant aucun élément mécanique mobile pour contrôler l'écoulement d'un métal ou alliage métallique en phase liquide dans une canalisation en charge. Les vannes électromagnétiques de ce type fonctionnent selon un principe semblable à celui du moteur linéaire, le rôle de l'induit mobile étant joué par le métal ou l'alliage métallique dont on doit contrôler l'écoulement. Dans ces vannes électromagnétiques, l'enroulement inducteur polyphasé est disposé et connecté électriquement de telle façon que le champ magnétique qu'il engendre se propage à contre-courant par rapport au sens normal d'écoulement du métal ou alliage métallique liquide dans la canalisation en charge. Autrement dit, la force magnétomatrice engendrée par l'enroulement inducteur polyphasé et appliquée au métal liquide dans la canalisation s'oppose à la force due à la pression hydrostatique du métal liquide dans la canalisation. En règlant l'intensité du courant dans l'écoulement inducteur polyphasé, il est possible de régler le débit du métal ou alliage métallique liquide dans la canalisation. Plus l'intensité du courant dans l'enroulement inducteur polyphasé est grande, plus faible est le débit du métal ou alliage métallique liquide s'écoulant à travers la vanne électromagnétique. Théoriquement, en utilisant un courant suffisamment intense, il est possible d'arrêter l'écoulement du métal ou de l'alliage métallique liquide arrivant à la vanne. Toutefois, l'intensité du courant nécessaire pour arrêter l'écoulement du métal ou de l'alliage métallique liquide est relativement importante, donc également la puissance électrique nécessaire pour maintenir la vanne électromagnétique à l'état "fermé", et, dans la pratique, il s'est avéré difficile d'obtenir un arrêt complet et sûr de l'écoulement de métal ou d'alliage métallique liquide.

Pour obtenir un arrêt complet de l'écoulement de métal ou d'alliage métallique liquide, il a été proposé de fermer partiellement l'extrémité en sortie du corps tubulaire de la vanne électromagnétique par une paroi transversale présentant un orifice de sortie désaxé ou décentré par rapport à l'axe longitudinal dudit corps tubulaire. Si une telle disposition permet effectivement d'arrêter totalement l'écoulement du métal ou de l'alliage métallique liquide, l'intensité du courant qui est nécessaire à cet effet reste cependant relativement importante et, en outre, lorsque la vanne électromagnétique est "ouverte", la paroi transversale avec son orifice de sortie décentré provoque des perturbations (turbulences) et des pertes de charge dans l'écoulement de métal ou d'alliage métallique liquide, qui peuvent être inacceptables dans certaines applications.

On connaît également, par le brevet GB-A-1 308 087, une vanne électromagnétique pour contrôler l'écoulement d'un métal et comprenant un noyau situé dans un corps tubulaire, ce noyau étant constitué d'un solénoïde alimenté électriquement et créant ainsi un champ magnétique.

La présente invention a pour but de fournir une vanne électromagnétique qui nécessite une puissance électrique plus faible que les vannes électromagnétiques antérieurement connues pour contrôler et arrêter l'écoulement d'un métal ou alliage métallique liquide dans une canalisation en charge, et qui n'introduit que peu de perturbations dans ledit écoulement quand la vanne est ouverte.

A cet effet, selon la présente invention, la vanne électromagnétique pour contrôler l'écoulement d'un métal ou alliage métallique en phase liquide dans une canalisation en charge, comporte un corps tubulaire en une matière perméable au champ magnétique, et au moins un enroulement inducteur polyphasé disposé autour dudit corps tubulaire pour créer un champ magnétique glissant le long de l'axe longitudinal du même corps tubulaire, ladite vanne étant caractérisée en ce qu'elle comporte un noyau, constitué par un matériau magnétique, qui est maintenu et s'étend axialement dans le corps tubulaire pour assurer le bouclage du champ magnétique engendré par l'enroulement inducteur polyphasé, ledit noyau ménagant entre lui et la paroi interne dudit corps tubulaire un passage sensiblement annulaire pour le métal ou l'alliage métallique liquide dont l'écoulement doit être contrôlé.

Suivant une forme préférée d'exécution de la présente invention, le noyau est constitué par un barreau magnétique noyé dans une masse de matière perméable au champ magnétique, ledit noyau étant relié au corps tubulaire de la vanne par des bras radiaux élaborés à partir de ladite matière.

Bien que les raisons pour lesquelles la vanne électromagnétique de la présente invention est plus efficace que les vannes électromagnétiques antérieurement connues ne sont pas complètement élucidées, on peut néanmoins penser que cela est dû au fait que, d'une part, le flux magnétique engendré par l'enroulement inducteur est concentré par le noyau prévu dans le corps tubulaire, et que, d'autre part, l'écoulement de métal ou d'alliage métallique liquide est confiné dans la région annulaire comprise entre le noyau et la paroi interne du corps tubulaire, c'est-à-dire dans une région où le champ magnétique est naturellement plus intense, donc plus efficace qu'au centre du conduit tubulaire, cette région annulaire étant plus proche de l'enroulement inducteur qui entoure ledit corps tubulaire.

On décrira maintenant une forme d'exécution donnée à titre d'exemple non limitatif de la présente invention en référence aux dessins annexés sur lesquels :
- la figure 1 est une vue schématique en coupe axiale d'une vanne électromagnétique selon l'invention,
- la figure 2 est une demi-vue en coupe suivant la ligne II-II de la figure 1.

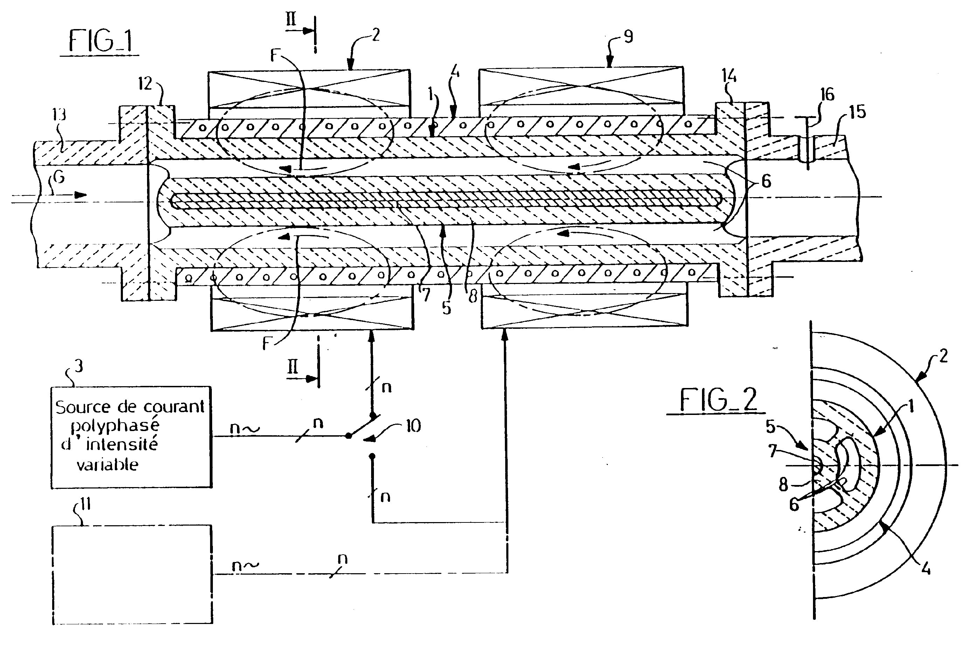

La vanne électromagnétique montrée dans les figures 1 et 2 comprend, de façon connue, un corps tubulaire 1 réalisé en une matière qui est perméable au champ magnétique créé par un enroulement inducteur polyphasé 2, qui entoure le corps tubulaire 1 et qui peut être alimenté en courant par une source de courant polyphasé 3 d'intensité variable.

Dans le cas où la vanne électromagnétique est destinée à contrôler un écoulement d'un métal ou d'un alliage métallique en fusion, le corps 1 est de préférence réalisé en une matière réfractaire non mouillable par contact avec le métal ou alliage métallique en fusion, par exemple une matière céramique.

En outre, dans ce cas, le corps tubulaire est de préférence entouré étroitement, sur toute sa longueur, d'un dispositif de chauffage 4 apte à chauffer le corps 1 à une température suffisante pour maintenir le métal ou alliage métallique fondu à une température prédéterminée supérieure à sa température de fusion. Le dispositif de chauffage 4 peut être constitué de façon connue, par exemple par un dispositif de chauffage à induction électromagnétique ou par des résistances électriques chauffantes.

D'un autre côté, si le métal ou l'alliage métallique est liquide à basse température ou à la température ambiante, le corps 1 n'a pas besoin d'être en une matière réfractaire et peut être simplement en une matière qui est perméable au champ magnétique, suffisamment rigide pour assurer la résistance mécanique du corps de la vanne et compatible avec le métal ou l'alliage métallique traversant ladite vanne.

L'enroulement inducteur polyphasé 2 est disposé et connecté électriquement de manière à créer un champ glissant le long de l'axe longitudinal du corps tubulaire 1 dans une direction telle que les forces magnétomotrices F exercées par l'enroulement inducteur polyphasé 2 sur le métal ou l'alliage métallique liquide s'écoulant dans le corps tubulaire 1 s'opposent à l'écoulement dudit métal ou alliage métallique liquide, indiqué par la flèche G, sous l'effet de la pression hydrostatique. L'enroulement inducteur polyphasé 2 peut être par exemple constitué par un enroulement du type fabriqué par le laboratoire "MADYLAM" à Saint-Martin d'Heres, France. Si nécessaire, cet inducteur peut être refroidi de façon connue par un fluide réfrigérant amené à circuler dans des canaux prévus dans ledit enroulement. Le courant nécessaire à l'excitation de l'enroulement inducteur polyphasé 2, fourni par la source 3, peut être par exemple obtenu à partir du réseau triphasé 380V, 50Hz, couplé à un transformateur abaisseur de tension apte à abaisser la tension à 17V et lui-même couplé à l'inducteur 2 par l'intermédiaire d'un dispositif de réglage d'intensité.

Suivant l'invention, un noyau 5 s'étend axialement dans le corps tubulaire 1 et est maintenu dans celui-ci par plusieurs bras ou membrures radiales 6. Le noyau 5 peut avoir sensiblement la même longueur que le corps tubulaire 1 et les bras ou membrures 6 peuvent avoir la même longueur que la noyau 5 ou s'étendre seulement sur une partie de la longueur de celui-ci. De préférence, le noyau 5 et les membrures 6 sont profilés de manière à engendrer le moins de perturbations possibles dans le métal ou l'alliage liquide s'écoulant dans le corps tubulaire 1. Pour les mêmes raisons, le diamètre intérieur du corps tubulaire 1 et le diamètre extérieur du noyau 5 sont choisis de telle façon que l'aire de la section annulaire de passage entre le noyau 5 et le corps 1 soit égale à l'aire de la section circulaire de passage en amont et éventuellement en aval de la vanne électromagnétique. De préférence, le noyau 5 est constitué par un barreau magnétique 7 noyé dans une masse 8 de matière perméable au champ magnétique, cette matière étant de préférence la même que celle constituant les bras ou membrures 6 et le corps tubulaire 1, par exemple une matière réfractaire non mouillable au contact avec le métal ou l'alliage métallique liquide. Le barreau magnétique 7 permet d'assurer le bouclage du champ magnétique engendré par l'enroulement inducteur polyphasé 2.

Dans la forme d'exécution représentée à titre d'exemple sur la figure 1, la vanne électromagnétique peut comporter un deuxième enroulement inducteur polyphasé 9 disposé et connecté électriquement de manière à pouvoir jouer un rôle semblable à celui de l'enroulement inducteur polyphasé 2. L'enroulement inducteur polyphasé 9 peut être connecté à la source de courant 3, par exemple par l'intermédiaire d'un commutateur 10, ou il peut être connecté à sa propre source de courant polyphasé réglable 11 comme montré en traits mixtes sur la figure 1. Dans le premier cas, l'enroulement inducteur polyphasé 9 assure en doublement la même fonction que l'enroulement inducteur polyphasé 2 et peut être utilisé comme enroulement de secours en cas de défaillance de l'enroulement 2. Dans le second cas, on peut éventuellement admettre un faible débit de fuite au niveau de l'enroulement inducteur polyphasé 2, faible débit qui pourra ensuite être facilement arrêté par le champ magnétique créé par l'enroulement inducteur polyphasé 9. Cette seconde disposition a pour intérêt de réduire encore la consommation d'énergie nécessaire pour arrêter complètement le débit de métal ou d'alliage métallique liquide, et de limiter le dimensionnement des équipements nécessaires à l'alimentation en courant des enroulements inducteurs 2 et 9.

A son extrémité d'entrée, le corps tubulaire 1 est pourvu d'une bride ou autre moyen de raccordement 12 par lequel la vanne électromagnétique peut être fixée à l'extrémité d'une canalisation 13 d'amenée du métal ou de l'alliage liquide ou à un récipient contenant ledit métal ou alliage liquide. De même, à son extrémité de sortie, le corps tubulaire 1 peut aussi comporter une bride ou autre moyen de raccordement approprié 14 par lequel la vanne électromagnétique peut être raccordée, si on le désire, à une autre canalisation 15 de transport du métal ou alliage métallique liquide.

Dans le cas où la vanne électromagnétique est destinée à contrôler l'écoulement d'un métal ou alliage métallique en fusion, le corps tubulaire 1, ou la canalisation 15, peut être avantageusement pourvu d'un injecteur 16 permettant une injection contrôlée d'un gaz neutre ou inerte évitant une oxydation du métal ou alliage métallique liquide retenu dans la vanne électromagnétique.

A titre d'exemple, avec vanne électromagnétique dont le corps 1 a un diamètre intérieur de 14 mm et un noyau 5 ayant un diamètre extérieur de 8 mm, et comprenant un unique inducteur polyphasé ayant 10 spires par phase d'un diamètre de 45 mm, il a été possible d'arrêter complètement l'écoulement d'un alliage de zinc fondu, qui était maintenu à une température de 480°C, la pression hydrostatique à l'entrée de la vanne électromagnétique étant de 2,5.10⁴ Pa (0,25 bar). Pour cela, l'inducteur polyphasé a été alimenté avec un courant de 2400 A. (Il est à noter que le montage avec lequel l'expérience a été faite n'était pas optimisé et ne comportait pas de dispositif de réglage d'intensité ; on peut donc s'attendre à ce que l'intensité du courant suffisante pour provoquer l'arrêt complet de l'écoulement du zinc fondu soit encore plus faible que 2400 A). A titre de comparaison, avec une vanne électromagnétique sans noyau central, pour arrêter à peu près complètement l'écoulement d'alliage de zinc fondu il aurait fallu alimenter l'inducteur avec un courant polyphasé d'intensité au moins quatre à cinq fois plus forte.

## Revendications

1. Vanne électromagnétique pour contrôler l'écoulement d'un métal ou d'un alliage métallique en phase liquide dans une canalisation (13, 15) en charge, ladite vanne comprenant un corps tubulaire (1) en une matière perméable au champ magnétique, et un enroulement inducteur polyphasé (2) disposé autour dudit corps tubulaire pour créer un champ magnétique glissant le long de l'axe longitudinal du même corps tubulaire, ladite vanne étant caractérisée en ce qu'elle comporte un noyau (5), constitué par un matériau magnétique, qui est maintenu et s'étend axialement dans le corps tubulaire (1) pour assurer le bouclage du champ magnétique engendré par l'enroulement inducteur polyphasé (2), ledit noyau (5) ménageant entre lui et la paroi interne du corps tubulaire un passage sensiblement annulaire pour le métal ou alliage métallique liquide dont l'écoulement doit être contrôlé.

2. Vanne électromagnétique selon la revendication 1, caractérisée en ce que ledit noyau (5) est constitué par un barreau magnétique (7) noyé dans une masse (8) de matière perméable au champ magnétique, ledit noyau (5) étant relié au corps tubulaire (1) de ladite vanne par des bras radiaux (6) élaborés à partir de ladite matière.

3. Vanne électromagnétique selon l'une quelconque des revendications 1 ou 2, caractérisée en ce que le corps tubulaire (1) de la vanne, ou la canalisation (13, 15) à laquelle est raccordée ladite vanne, est avantageusement pourvu d'un injecteur (16) permettant une injection contrôlée d'un gaz neutre ou inerte évitant une oxydation du métal ou alliage métallique liquide retenu dans ladite vanne.

4. Vanne électromagnétique selon l'une quelconque des revendications 1 à 3, caractérisée en ce qu'elle comprend deux enroulements inducteurs polyphasés (2, 9) juxtaposés autour du corps tubulaire (1) de la vanne.

5. Vanne électromagnétique selon la revendication 4, caractérisée en ce que les enroulements inducteurs polyphasés (2, 9) sont connectés à des sources de courant (3, 11) réglables distinctes.

## Patentansprüche

1. Elektromagnetisches Ventil zum Steuern der Strömung eines Metalles oder einer Metallegierung in flüssiger Phase in einem Strömungskanal (13,15), mit einem rohrförmigen Körper (1) aus einem für ein Magnetfeld durchlässigen Material, und mit einer mehrphasigen Feldwicklung (2), die um den rohrförmigen Körper angeordnet ist, um ein Magnetfeld zu erzeugen, welches längs der longitudinalen Achse des rohrförmigen Körpers wandert, gekennzeichnet durch einen Kern (5), der im rohrförmigen Körper (1) angeordnet ist, sich in dessen Achsrichtung erstreckt und zwischen sich und der Innenwand des rohrförmigen Körpers einen im wesentlichen ringförmigen Kanal für das flüssige Metall oder die flüssige Metallegierung bildet, deren Strömung zu steuern ist, dieser Kern (5) gewährleistend einen Schluß des Magnetfeldes, das von der mehrphasigen Feldwicklung (2) erzeugt wird.

2. Elektromagnetisches Ventil nach Anspruch 1, dadurch gekennzeichnet, daß der Kern (5) einen weichmagnetischen Stab (7) enthält, der in eine Masse (5) aus einem diamagnetischen Material eingebettet ist und mit dem rohrförmigen Körper (1) des Ventils durch radiale Streben (6) aus dem genannten Material verbunden ist.

3. Elektromagnetisches Ventil nach Anspruch 1 oder 2, dadurch gekennzeichnet, daß der rohrförmige Körper (1) des Ventils oder die Leitung (13,15), mit der das Ventil verbunden ist, in vorteilhafter Weise mit einem Injektor (16) versehen sind, welcher eine kontrollierte Injektion eines neutralen oder inerten Gases ermöglicht, welches eine Oxidation des flüssigen Metalles oder der flüssigen Metallegierung im Ventil verhindert.

4. Elektromagnetisches Ventil nach einem der Ansprüche 1 bis 3, dadurch gekennzeichnet, daß es zwei mehrphasige Feldwicklungen (2,9) enthält, die nebeneinander um den rohrförmigen Körper (1) des Ventils angeordnet sind.

5. Elektromagnetisches Ventil nach Anspruch 4, dadurch gekennzeichnet, daß die mehrphasigen Feldwicklungen (2,9) mit verschiedenen steuerbaren Stromquellen (3,11) verbunden sind.

## Claims

1. An electro-magnetic valve for controlling the flow of a metal or metal alloy in liquid phase in a pipe (13,15) under load, said valve comprising a tubular body (1) made of a material permeable to the magnetic field, and a polyphase exciting winding (2) disposed around said tubular body to create a magnetic field sliding along the longitudinal axis of the same tubular body,
characterized in that said valve comprises a magnetic material core (5) which is maintained and extends axially in the tubular body (1), for looping the magnetic field generated by the polyphase exciting winding (2), said core (5) forming between it and the inner wall of the tubular body a substantially annular passage for the liquid metal or metal alloy whose flow is to be controlled.

2. The electro-magnetic valve of Claim 1, characterized in that the core (5) is constituted by a bar magnet (7) embedded in a mass (8) of material permeable to the magnetic field, said core (5) being connected to the tubular body (1) of said valve by radial arms (6) made from said material.

3. The electro-magnetic valve of either one of Claims 1 or 2, characterized in that the tubular body (1) of the valve, or the pipe (13,15) to which said valve is connected, is advantageously provided with an injector (16) allowing controlled injection of a neutral or inert gas avoiding oxidation of the liquid metal or metal alloy retained in said valve.

4. The electro-magnetic valve of any one of Claims 1 to 3, characterized in that it comprises two juxtaposed polyphase exciting windings (2,9) around the tubular body (1) of the valve.

5. The electro-magnetic valve of Claim 4, characterized in that the polyphase exciting windings (2,9) are connected to distinct adjustable sources of current (3,11).
